# EUROPÄISCHE PATENTSCHRIFT

(11) **EP 0 526 804 B1**
(45) Veröffentlichungstag und Bekanntmachung des Hinweises auf die Patenterteilung: **04.01.1995**
(21) Anmeldenummer: 92112534.0
(22) Anmeldetag: 22.07.1992
(51) Int. Cl.: C08J 5/24, C08G 12/46, C08G 12/42

(54) **Melaminharz-Prepregs und Melaminharz-Laminate auf Basis modifizierter Melaminharze**
Melamine resin prepregs and laminates based on modified resin
Laminés préimpregnés à base de résines de mélamine modifiées

(30) Priorität: 05.08.1991 AT 1547/91
(43) Veröffentlichungstag der Anmeldung: 10.02.1993
(73) Patentinhaber: Chemie Linz GmbH, A-4021 Linz (AT)
(72) Erfinder: Horacek, Heinrich, Dr., A-4048 Puchenau (AT)
(74) Vertreter: Kunz, Ekkehard, Dr.

(56) Entgegenhaltungen:
- EP-A- 0 342 386
- BE-A- 656 981
- FR-A- 2 185 662
- GB-A- 851 295

## Beschreibung

Die Erfindung betrifft Melaminharz-Prepregs und aus diesen Prepregs durch thermisches Aushärten erhaltene Melaminharz-Laminate auf Basis modifizierter Melaminharze, sowie modifizierte Melaminharze.
Melaminharz-Laminate auf Basis von imprägnierten Papieren finden aufgrund ihrer guten Lichtechtheit, Abriebfestigkeit, Chemikalienbeständigkeit, Glutbeständigkeit und Oberflächenhärte ein großes Einsatzgebiet als Dekor- und Schutzfolien. Weiters werden sie als technische Laminate vor allem wegen ihrer hohen Kriechstromfestigkeit als Elektrofolien verwendet.

Derartige Schichtpreßstoffe, die durch Imprägnieren von Trägerbahnen aus Textilien, Papier oder Glasvliesen mit wäßrigen Lösungen von Melamin-Formaldehyd-Vorkondensaten und anschließendes Trocknen und Aushärten bei Temperaturen von über 100°C erhalten werden, sind beispielsweise in der EP-A-077 067 beschrieben. In der EP-B1-268 809 sind Melaminharzfolien beschrieben, die durch Beschichten von Papieren mit einer mindestens 70 gew.%igen wäßrigen Lösung eines methylveretherten Melaminharzes erhalten werden. Veretherte Melaminharze, die zur Verbesserung der Schmelzbarkeit und der Fließeigenschaften mit Polyethylenglykol modifiziert sind, sind aus der GB-A-851,295 bekannt. Aus der EP-A-342 386 ist bekannt, daß die Wasserlöslichkeit von veretherten Melaminharzen durch Zusatz von wasserlöslichen 2- oder 3-wertigen Alkoholen bei der Kondensation erhöht wird.
Der Nachteil der bekannten Melaminharze und Melaminharz-Laminate liegt insbesondere darin, daß sie beim Aushärten eine relativ große Schwindung aufweisen, daß ihre mechanischen Eigenschaften in vielen Fällen nicht ausreichend sind, und daß sie vor allem sehr spröde sind. Aus diesem Grunde war es wünschenswert, Melaminharze und Melaminharz-Laminate mit insbesondere besseren mechanischen Eigenschaften und geringerer Schwindung beim Aushärten zu erhalten.

Es wurde überraschenderweise gefunden, daß derartige verbesserte Melaminharze, Melaminharz-Prepregs und Melaminharz-Laminate durch Verwendung von mit unterschiedlichen Diolen modifizierten, veretherten Melaminharzen erhalten werden.

Gegenstand der Erfindung sind demnach Melaminharz-Prepregs oder Melaminharz-Laminate, die aus einer bahnförmigen Faserverstärkung bestehen, die mit zumindest teilweise veretherten, mit Diolen modifizierten Melaminharzen imprägniert ist, die im wesentlichen aus
a) 40 - 85 Gew.% zumindest teilweise veretherten Melaminharzen, die durch Umsetzung von Melamin, Formaldehyd und Alkanolen mit 1 bis 8 C-Atomen im Molverhältnis Melamin:Formaldehyd:Alkanol von 1:(5 bis 6):(4 bis 6) erhältlich sind, und
b) 60 - 15 Gew.% Diolen, bestehend aus 25 bis 75 Gew.% Polyesterdiolen und/oder Polyetherdiolen mit einem Molekulargewicht von mindestens 400 g/Mol und 75 bis 25 Gew.% niedermolekularen Diolen mit 2 bis 12 C-Atomen, bestehen. Die Melaminharze können teilweise oder vollständig ausgehärtet sein.

Ein weiterer Gegenstand der Erfindung sind mit Diolen modifizierte zumindest teilweise veretherte Melaminharze, die im wesentlichen aus
a) 40 - 85 Gew.% zumindest teilweise veretherten Melaminharzen, die durch Umsetzung von Melamin, Formaldehyd und Alkanolen mit 1 bis 8 C-Atomen im Molverhältnis Melamin:Formaldehyd:Alkanol von 1:(5 bis 6):(4 bis 6) erhältlich sind, und
b) 60 - 15 Gew.% Diolen, bestehend aus 25 bis 75 Gew.% Polyesterdiolen und/oder Polyetherdiolen mit einem Molekulargewicht von mindestens 400 g/Mol und 75 bis 25 Gew.% niedermolekularen Diolen mit 2 bis 12 C-Atomen, bestehen.

Die veretherten Melaminharze sind bevorzugt mit Alkanolen mit 1 - 4C-Atomen verethert.
Bevorzugt bestehen die zumindest teilweise veretherten, modifizierten Melaminharze im wesentlichen aus 50 - 70 Gew.% zumindest teilweise veretherten Melaminharzen und 50 - 30 Gew.% Diolen.

Die veretherten Melaminharze können beispielsweise gemäß Kirk-Othmer, Encyclopedia of Chemical Technology 1. Aufl. Vol. 1 (1947) Seite 756 - 759 durch Umsetzung von Melamin mit Formaldehyd bei etwa 80°C in alkalischer Lösung und anschließende Veretherung mit einem Alkanol bei etwa 70°C in saurer Lösung hergestellt werden. Überschüssiges Wasser und nicht umgesetztes Alkanol können anschließend nach Zugabe von beispielsweise Toluol als Schleppmittel abdestilliert werden. Veretherte Melaminharze sind auch im Handel erhältlich, beispielsweise Hexamethoxyhexamethylmelamin (Cymel 303, Fa. Cyanamid; U 100, Fa. Chemie Linz), Hexamethoxyhexabutylmelamin (Cymel 1156), Hexamethoxypentamethylbutylmelamin (Cymel 1130), Hexamethoxytetramethyldiethylmelamin (Cymel 1116), Hexamethoxytrimethyltributylmelamin (Cymel 1133), Hexamethoxypentamethylisobutylmelamin (Cymel 1168). Die kommerziell erhältlichen Harze bestehen vorwiegend aus monomeren Einheiten, mit geringen Anteilen an Dimeren und Trimeren.

Die veretherten Melaminharze sind durch einen Gehalt an Diolen modifiziert. Die Diole bestehen bevorzugt aus 40 - 60 Gew.% Polyesterdiolen und/oder Polyetherdiolen und 60 - 40 Gew.% niedermolekularen Diolen. Polyesterdiole können durch Polykondensation von aliphatischen oder aromatischen Dicarbonsäuren mit Glykolen hergestellt werden, wie z. B. in Oertel, "Polyurethane", Kunststoffhandbuch (1983) Hanser Verlag München, Seite 54 bis 61 beschrieben. Bevorzugt als Polyesterdiole sind Kondensationsprodukte aus Adipinsäure und/oder Phthalsäure mit Ethylenglykol und/oder 1,4-Butandiol. Polyesterdiole sind auch im Handel erhältlich, beispielsweise als Desmophen 2000, 2400S oder 2450 von Bayer oder Elastophen 8100 von BASF. Polyetherdiole können beispielsweise durch Polymerisation von Ethylenoxid, Propylenoxid oder Tetrahydrofuran erhalten werden. Sie sind auch kommerziell erhältlich, beispielsweise Polypropylenglykol bei DOW (z. B. Voranol P400) oder Polytetrahydrofurandiol bei Du Pont oder BASF. Besonders bevorzugt als Polyetherdiole werden Polytetrahydrofurandiole eingesetzt. Das Molekulargewicht der Polyesterdiole und Polyetherdiole liegt üblicherweise bei 400 bis etwa 3000 g/Mol. Es ist jedoch auch möglich, Polymerdiole mit höherem Molekulargewicht einzusetzen, wobei es jedoch günstig ist, aufgrund der hohen Viskosität bzw. Schmelztemperatur ein maximales Molekulargewicht von etwa 10.000 g/Mol einzuhalten.

Unter niedermolekularen Diolen, die zusätzlich zu den oben angeführten Polyesterdiolen und Polyetherdiolen (Polymerdiole) eingesetzt werden, sind Diole mit 2 bis 12 C-Atomen im Molekül und einem Molekulargewicht von kleiner als etwa 350 g/Mol zu verstehen, wobei außer monomeren auch dimere und höher kondensierte Diole in Frage kommen. Beispiele für niedermolekulare Diole sind Ethylenglykol, Diethylenglykol, Triethylenglykol, Propylenglykol, 1,4-Butandiol, 1,8-Octandiol, 1,10-Decandiol, oder 1,12-Dodecandiol. Der besondere Vorzug der niedermolekularen Diole liegt in ihrer Wirkung als reaktive Lösungsmittel, wodurch sie neben ihrer Wirkung als Reaktionskomponenten zur Modifizierung der veretherten Melaminharze gleichzeitig auch als Lösungsmittel wirken. Durch die Zugabe der niedermolekularen Diole wird insbesondere eine gezielte Einstellung der optimalen Viskositäten bei der Imprägnierung ermöglicht, wobei sie gleichzeitig als zusätzliche Reaktionskomponente in das Melaminharz eingebaut werden, ohne daß andere Lösungsmittel erforderlich wären, die beim anschließenden Trocknen und Aushärten bei gleichzeitiger Schrumpfung des Harzes wieder verdampfen. Außerdem bewirkt der Zusatz von niedermolekularen Diolen eine Verbesserung der Lagerstabilität durch Verhinderung des vorzeitigen Auskristallisierens.

Zur Beschleunigung der Reaktion bei der Modifikation der Melaminharze mit den Diolen können übliche Katalysatoren wie z. B. p-Toluolsulfonsäure in Mengen von etwa 0,1 - 1 Gew.%, bezogen auf die Gesamtmenge des Melaminharzes, zugesetzt werden.

Die bahnförmige Faserverstärkung der erfindungsgemäßen Melaminharz-Prepregs oder Melaminharz-Laminate besteht bevorzugt aus einem Vlies, Gewebe oder Gelege aus Glas-, Kohle-, Keramik- oder Aramidfasern. Es ist auch möglich, Papierbahnen mit dem Melaminharz zu imprägnieren. Entsprechend den Anforderungen an die Eigenschaften, insbesondere an die Festigkeit und Steifigkeit der Laminate, können auch Gemische verschiedener Fasern, unidirektionale Endlosfasern oder mehrere Lagen gleicher oder verschiedener Verstärkungsbahnen eingesetzt werden.

Die Herstellung der erfindungsgemäßen Prepregs erfolgt durch Imprägnieren der bahnförmigen Faserverstärkung mit dem veretherten, modifizierten Melaminharz, beispielsweise durch Tauchen oder Sprühen und anschließendes Abquetschen oder Rakeln bis zum gewünschten Harzgehalt des Prepregs. Der Harzgehalt der Prepregs ist vor allem von den geforderten Eigenschaften des Prepregs bzw. des Laminates sowie von der Art der Faserverstärkung abhängig und liegt üblicherweise bei 30 bis 70 Gew.%.

Entsprechend der Viskosität und Konsistenz des Melaminharzes erfolgt die Imprägnierung üblicherweise bei Temperaturen von etwa 20 bis 60°C. Um ein Ausfließen des Melaminharzes aus dem Prepreg zu verhindern, werden die Prepregs im Anschluß an die Imprägnierung bei etwa 80 bis 150°C vorreagiert, wobei das leichtfließende Imprägnierharz je nach Temperatur und Länge der thermischen Behandlung mehr oder weniger unter teilweiser Aushärtung und Vernetzung zum sogenannten "B-Zustand" reagiert. Im B-Zustand ist das Prepreg bei etwa 0°C lager- und transportfähig und kann auch zum gewünschten Formteil weiterverarbeitet werden. Dabei erfolgt eine weitere thermische Behandlung bei etwa 100 bis 200°C, gegebenenfalls unter Druck bzw. in Formpressen, wobei die Prepregs unter weiterer Vernetzung des Melaminharzes zum "C-Zustand", zu Laminaten oder Formteilen aushärten, die nicht mehr weiter verformt werden können.
Die erfindungsgemäßen Harze, Prepregs und Laminate zeichnen sich vor allem durch verbesserte mechanische Eigenschaften, sowie durch erhöhte Zähigkeit und geringeres Schwinden des Harzes beim Härten aus. Weiters ist es besonders vorteilhaft, daß die erfindungsgemäßen Harze ohne Wasser bzw. zusätzliche Lösungsmittel, die beim Trocknen bzw. Härten wieder abdampfen, hergestellt werden können.

In den nachfolgenden Beispielen wurden folgende Einsatzstoffe verwendet:

### a) veretherte Melaminharze

- HMMM I: Hexamethoxyhexamethylmelamin (U100, Chemie Linz)
Molverhältnis Melamin:Formaldehyd:Methanol = 1:5,6:5,1
Polymerisationsgrad 2,0
- HMMM II: Hexamethoxyhexamethylmelamin (Cymel 303, Cyanamid)
Molverhältnis Melamin:Formaldehyd:Methanol = 1:5,8:5,2
Polymerisationsgrad 1,75.
- HMBM: Hexamethoxyhexabutylmelamin (Cymel 1156, Cyanamid)
Molverhältnis Melamin:Formaldehyd:Butanol = 1:5,7:5,1
Polymerisationsgrad 2,9
- HMMB: Hexamethoxypentamethylbutylmelamin (Cymel 1130, Cyanamid)
Molverhältnis Melamin:Formaldehyd:Methanol:Butanol= 1:5,8:4,2:1,0
Polymerisationsgrad 2,3
- HMME: Hexamethoxytetramethyldiethylmelamin (Cymel 1116, Cyanamid)
Molverhältnis Melamin:Formaldehyd:Methanol:Ethanol= 1:5,8:3,4:2,0
Polymerisationsgrad 1,6

### b) Diole

- PTH 650: Polytetrahydrofurandiol (BASF)
Molgewicht = 650 g/Mol
- PTH 1000: Polytetrahydrofurandiol (BASF)
Molgewicht = 1000 g/Mol
- Voranol P400: Polypropylenglykol (DOW)
Molgewicht = 400 g/Mol
- Desmophen 2000: Kondensationsprodukt aus Phthalsäure, Adipinsäure, Ethylenglykol und 1,4-Butandiol (Bayer)
Molgewicht = 2000 g/Mol
- Desmophen 2400S: Kondensationsprodukt aus Phthalsäure, Adipinsäure, Ethylenglycol und 1,4-Butandiol (Bayer)
Molgewicht = 530 g/Mol
- EG: Ethylenglykol (Dow)
- PG: Propylenglykol (Dow)
- DPG: Dipropylenglykol (Dow)
- Bu: 1,4-Butandiol (Riedel de Haen)
- Oc: 1,8-Octandiol (Chemie Linz)

### Beispiel 1

In einem Rührbehälter wurden bei 60°C 100 Gew.Teile HMMM I mit 33 Gew.Teilen PTH 650 und 33 Gew.Teilen Dipropylenglykol (DPG) vermischt und solange gerührt, bis ein modifiziertes Melaminharz mit einer Viskosität bei 20°C von 3000 mPas erhalten wurde.
Anschließend wurde ein Glasgewebe (Type US7628 mit 200 g/m², Fa. Interglas) mit dem Melaminharz durch Tauchen und anschließende Führung durch Abquetschwalzen bei 25°C imprägniert. Das feuchte Prepreg wurde in einem Heiztunnel während 5 Minuten bei 120°C vorreagiert, so daß ein weiches, leicht klebriges, noch nicht geliertes Prepreg im B-Zustand (noch nicht ausreagiert) mit einem Harzgehalt von 50 Gew.% vorlag. Anschließend wurde in einer Heißpresse bei 20 bar und 150°C während 30 Minuten verpreßt, wobei das Prepreg zu einem flexiblen Laminat im C-Zustand mit einem Harzgehalt von 40 Gew.% ausreagierte.

An den Laminaten wurden folgende Eigenschaften gemessen:
- Biegefestigkeit (N/mm²): gemäß EN 63 und DIN 53452
- Schlagzähigkeit (kJ/m²): gemäß ISO/R 180-1961
- Kerbschlagzähigkeit (kJ/m²): gemäß DIN 53453
(Schlagbiegeversuch)
- Zugfestigkeit (N/mm²): gemäß DIN 53455 und EN 61
- Druckfestigkeit (N/mm²): gemäß DIN 53454
- E-Modul (N/mm²): gemäß DIN 53457 (Zugversuch)
- Dehnung (%): gemäß DIN 53455
Die Eigenschaftswerte sind in Tabelle 2 zusammengestellt.

### Beispiel 2 bis 15

Analog zu Beispiel 1 wurden Laminate hergestellt, wobei jedoch die in Tabelle 1 angeführten Gew.Teile von Melaminharzen und Diolen verwendet wurden. Bei den Beispielen 4 sowie 6 bis 15 wurden der Mischung zusätzlich 0,75 Gew.% p-Toluolsulfonsäure (Merck) bezogen auf die Gesamtmenge der Melaminharze und Diole, als Katalysator zugesetzt.

Die Laminate sind auch im gehärteten Zustand flexibel, beim Biegen und Rollen löst sich das Harz nicht von der Faserverstärkung ab.

Die Eigenschaftswerte der Laminate sind in Tabelle 2 zusammengestellt.

### Vergleichsbeispiel V1

Analog zu Beispiel 1 wurde ein Laminat hergestellt, das jedoch nur mit HMMM I (ohne Modifizierung mit Diolen) imprägniert wurde. Es wurde ein sehr hartes und sprödes Laminat mit schlechteren Eigenschaften als gemäß den erfindungsgemäßen Beispielen erhalten. Das Laminat läßt sich insbesondere im gehärteten Zustand nicht aufrollen oder biegen, ohne daß sich die Polymermatrix von der Faserverstärkung löst.

Die Eigenschaftswerte des Laminates sind in Tabelle 2 zusammengestellt.

**Tabelle 1**

| Imprägnierharze | | | |
|---|---|---|---|
| Beispiel | Gew.Teile verethertes Melaminharz (Gew.%) | Gew.Teile Polymerdiol (Gew.%) | Gew.Teile niedermolekulares Diol (Gew.%) |
| V1 | 100 HMMM I | - | - |
| | (100) | | |
| 1 | 100 HMMM I | 33 PTH 650 | 33 DPG |
| | (60) | (20) | (20) |
| 2 | 100 HMMM I | 31 PTH 650 | 31 EG |
| | (62) | (19) | (19) |
| 3 | 100 HMMM I | 50 Desmophen 2000 | 50 Bu |
| | (50) | (25) | (25) |
| 4 | 100 HMMM II | 50 Desmophen 2000 | 50 PG |
| | (50) | (25) | (25) |
| 5 | 100 HMMM I | 25 Desmophen 2000 | 50 EG |
| | (57,1) | (14,3) | (28,6) |
| 6 | 100 HMME | 50 Desmophen 2000 | 50 EG |
| | (50) | (25) | (25) |
| 7 | 100 HMMB | 50 Desmophen 2000 | 50 EG |
| | (50) | (25) | (25) |
| 8 | 100 HMBM | 50 Desmophen 2000 | 50 EG |
| | (50) | (25) | (25) |
| 9 | 100 HMMM II | 50 Desmophen 2400S | 50 EG |
| | (50) | (25) | (25) |
| 10 | 100 HMMM II | 25 PTH 1000 | 25 Bu |
| | (66,6) | (16,7) | (16,7) |
| 11 | 100 HMBM | 25 PTH 1000 | 25 EG |
| | (66,6) | (16,7) | (16,7) |
| 12 | 100 HMMM II | 45 Voranol P400 | 45 Bu |
| | (52,6) | (23,7) | (23,7) |
| 13 | 100 HMMM II | 25 PTH 1000 | 45 Oc |
| | (58,8) | (14,7) | (26,5) |
| 14 | 100 HMMM II | 45 PTH 650 | 25 EG |
| | (58,8) | (26,5) | (14,7) |
| 15 | 100 HMMM 25 | 10 PTH 650 | 10 EG |
| | (83,3) | (8,35) | (8,35) |

**Tabelle 2**

| Eigenschaften der Laminate | | | | | | | |
|---|---|---|---|---|---|---|---|
| Bsp. | Biegefestigkeit N/mm² | Schlagzähigkeit kJ/m² | Kerbschlagzähigkeit kJ/m² | Zugfestig keit N/mm² | Druckfestigkeit N/mm² | E-ModulN/mm² | Dehnung (%) |
| V1 | 260 | 50 | 30 | 120 | 180 | 14.000 | 2,6 |
| 1 | 290 | 70 | 50 | 150 | 200 | 15.000 | 2,8 |
| 2 | 280 | 60 | 40 | 180 | 210 | 14.500 | 2,7 |
| 3 | 300 | 60 | 35 | 200 | 190 | 14.000 | 2,6 |
| 4 | 270 | 70 | 55 | 160 | 195 | 15.000 | 2,8 |
| 5 | 280 | 60 | 40 | 200 | 190 | 14.500 | 2,7 |
| 6 | 300 | 65 | 50 | 210 | 200 | 15.000 | 2,8 |
| 7 | 290 | 60 | 45 | 210 | 210 | 14.000 | 2,6 |
| 8 | 280 | 70 | 40 | 200 | 210 | 14.500 | 2,7 |
| 9 | 275 | 70 | 55 | 190 | 200 | 14.000 | 2,6 |
| 10 | 280 | 70 | 50 | 170 | 200 | 15.000 | 3,0 |
| 11 | 270 | 65 | 50 | 130 | 210 | 15.500 | 2,7 |
| 12 | 280 | 70 | 55 | 150 | 200 | 14.000 | 2,6 |
| 13 | 290 | 70 | 50 | 180 | 200 | 14.250 | 2,7 |
| 14 | 300 | 75 | 55 | 160 | 190 | 14.000 | 3,0 |
| 15 | 310 | 70 | 50 | 180 | 190 | 14.500 | 2,5 |

## Patentansprüche

1. Melaminharz-Prepregs oder Melaminharz-Laminate bestehend aus einer bahnförmigen Faserverstärkung, die mit zumindest teilweise veretherten, mit Diolen modifizierten Melaminharzen imprägniert ist, dadurch gekennzeichnet, daß die Melaminharze im wesentlichen aus
a) 40 - 85 Gew.% zumindest teilweise veretherten Melaminharzen, die durch Umsetzung von Melamin, Formaldehyd und Alkanolen mit 1 bis 8 C-Atomen im Molverhältnis Melamin:Formaldehyd:Alkanol von 1:(5 bis 6):(4 bis 6) erhältlich sind, und
b) 60 - 15 Gew.% Diolen, bestehend aus 25 bis 75 Gew.% Polyesterdiolen und/oder Polyetherdiolen mit einem Molekulargewicht von mindestens 400 g/Mol und 75 bis 25 Gew.% niedermolekularen Diolen mit 2 bis 12 C-Atomen, bestehen.

2. Melaminharz-Prepregs oder Melaminharz-Laminate gemäß Anspruch 1, dadurch gekennzeichnet, daß die zumindest teilweise veretherten, mit Diolen modifizierten Melaminharze im wesentlichen aus
a) 50 bis 70 Gew.% zumindest teilweise veretherten Melaminharzen und
b) 50 bis 30 Gew.% Diolen bestehen.

3. Melaminharz-Prepregs oder Melaminharz-Laminate gemäß Anspruch 1 oder 2, dadurch gekennzeichnet, daß die Alkanole 1 bis 4 C-Atome besitzen.

4. Melaminharz-Prepregs oder Melaminharz-Laminate gemäß einem der Ansprüche 1 bis 3, dadurch gekennzeichnet, daß die Diole aus 40 bis 60 Gew.% Polyesterdiolen und/oder Polyetherdiolen und 60 bis 40 Gew.% niedermolekularen Diolen bestehen.

5. Melaminharz-Prepregs oder Melaminharz-Laminate gemaß einem der Ansprüche 1 bis 4, dadurch gekennzeichnet, daß die Polyesterdiole Kondensationsprodukte aus Adipinsäure und/oder Phthalsäure mit Ethylenglykol und/oder 1,4 Butandiol sind.

6. Melaminharz-Prepregs oder Melaminharz-Laminate gemäß einem der Ansprüche 1 bis 5, dadurch gekennzeichnet, daß die Polyetherdiole Polytetrahydrofurandiole sind.

7. Melaminharz-Prepregs oder Melaminharz-Laminate gemäß einem der Ansprüche 1 bis 6, dadurch gekennzeichnet, daß die Faserverstärkung aus einem Vlies, Gewebe oder Gelege aus Glas-, Kohle- oder Aramidfasern besteht.

8. Verfahren zur Herstellung von Melaminharz-Prepregs oder Melaminharz-Laminaten, dadurch gekennzeichnet, daß eine bahnförmige Faserverstärkung mit zumindest teilweise veretherten, mit Diolen modifizierten Melaminharzen imprägniert wird, die im wesentlichen aus
a) 40 - 85 Gew.% zumindest teilweise veretherten Melaminharzen, die durch Umsetzung von Melamin, Formaldehyd und Alkanolen mit 1 bis 8 C-Atomen im Molverhältnis Melamin:Formaldehyd:Alkanol von 1:(5 bis 6):(4 bis 6) erhältlich sind, und
b) 60 - 15 Gew.% Diolen, bestehend aus 25 bis 75 Gew.% Polyesterdiolen und/oder Polyetherdiolen mit einem Molekulargewicht von mindestens 400 g/Mol und 75 bis 25 Gew.% niedermolekularen Diolen mit 2 bis 12 C-Atomen, bestehen, und daß das bei der Imprägnierung erhaltene Prepreg gegebenenfalls teilweise oder vollständig ausgehärtet wird.

9. Modifizierte zumindest teilweise veretherte Melaminharze, die im wesentlichen aus
a) 40 - 85 Gew.% zumindest teilweise veretherten Melaminharzen, die durch Umsetzung von Melamin, Formaldehyd und Alkanolen mit 1 bis 8 C-Atomen im Molverhältnis Melamin:Formaldehyd:Alkanol von 1:(5 bis 6):(4 bis 6) erhältlich sind, und
b) 60 - 15 Gew.% Diolen, bestehend aus 25 bis 75 Gew.% Polyesterdiolen und/oder Polyetherdiolen mit einem Molekulargewicht von mindestens 400 g/Mol und 75 bis 25 Gew.% niedermolekularen Diolen mit 2 bis 12 C-Atomen,
bestehen.

## Claims

1. Melamine resin prepregs or melamine resin laminates consisting of a web-like fibre reinforcement impregnated with at least partly etherified melamine resins modified with diols, characterized in that the melamine resins essentially consist of
a) 40 - 85% by weight of at least partly etherified melamine resins, which are obtainable by reaction of melamine, formaldehyde and alkanols having 1 to 8 C atoms in a molar ratio of melamine:formaldehyde:alkanol of 1:(5 to 6):(4 to 6), and
b) 60 - 15% by weight of diols consisting of 25 to 75% by weight of polyester-diols and/or polyether-diols having a molecular weight of at least 400 g/mol and 75 to 25% by weight of low molecular weight diols having 2 to 12 C atoms.

2. Melamine resin prepregs or melamine resin laminates according to Claim 1, characterized in that the at least partly etherified melamine resins modified with diols essentially consist of
a) 50 to 70% by weight of at least partly etherified melamine resins and
b) 50 to 30% by weight of diols.

3. Melamine resin prepregs or melamine resin laminates according to Claim 1 or 2, characterized in that the alkanols have 1 to 4 C atoms.

4. Melamine resin prepregs or melamine resin laminates according to one of Claims 1 to 3, characterized in that the diols consist of 40 to 60% by weight of polyester-diols and/or polyether-diols and 60 to 40% by weight of low molecular weight diols.

5. Melamine resin prepregs or melamine resin laminates according to one of Claims 1 to 4, characterized in that the polyester-diols are condensation products of adipic acid and/or phthalic acid with ethylene glycol and/or 1,4-butanediol.

6. Melamine resin prepregs or melamine resin laminates according to one of Claims 1 to 5, characterized in that the polyether-diols are polytetrahydrofuran-diols.

7. Melamine resin prepregs or melamine resin laminates according to one of Claims 1 to 6, characterized in that the fibre reinforcement consists of a non-woven, woven fabric or fibre woven fabric of glass, carbon or aramid fibres.

8. Process for the production of melamine resin prepregs or melamine resin laminates, characterized in that a web-like fibre reinforcement is impregnated with at least partly etherified melamine resins modified with diols, which resins essentially consist of
a) 40 - 85% by weight of at least partly etherified melamine resins, which are obtainable by reaction of melamine, formaldehyde and alkanols having 1 to 8 C atoms in a molar ratio of melamine:formaldehyde:alkanol of 1:(5 to 6):(4 to 6), and
b) 60 - 15% by weight of diols consisting of 25 to 75% by weight of polyester-diols and/or polyether-diols having a molecular weight of at least 400 g/mol and 75 to 25% by weight of low molecular weight diols having 2 to 12 C atoms, and in that, if appropriate, the prepreg obtained during the impregnation is partly or completely cured.

9. Modified, at least partly etherified melamine resins which essentially consist of
a) 40 - 85% by weight of at least partly etherified melamine resins, which are obtainable by reaction of melamine, formaldehyde and alkanols having 1 to 8 C atoms in a molar ratio of melamine:formaldehyde:alkanol of 1:(5 to 6):(4 to 6), and
b) 60 - 15% by weight of diols consisting of 25 to 75% by weight of polyester-diols and/or polyether-diols having a molecular weight of at least 400 g/mol and 75 to 25% by weight of low molecular weight diols having 2 to 12 C atoms.

## Revendications

1. Préimprégnés de résines de mélamine ou stratifiés de résines de mélamine formés d'un renfort fibreux en forme de bande, qui est éthérifié au moins partiellement et est imprégné avec des résines de mélamine modifiées par des diols, caractérisés en ce que les résines de mélamine sont formées essentiellement de :
a) 40 à 85 % en poids de résines de mélamine éthérifiées au moins partiellement, que l'on peut obtenir par mise en réaction de mélamine, de formaldéhyde et d'alcanols ayant de 1 à 8 atomes de carbone, à un rapport molaire de mélamine:formaldéhyde:alcanol de 1:(5 à 6):(4 à 6), et
b) 60 à 15 % en poids de diols composés de 25 à 75 % en poids de polyesterdiols et/ou de polyétherdiols ayant un poids moléculaire d'au moins 400 g/mole et 75 à 25 % en poids de diols de faible poids moléculaire ayant de 2 à 12 atomes de carbone.

2. Préimprégnés de résines de mélamine ou stratifiés de résines de mélamine selon la revendication 1, caractérisés en ce que les résines de mélamine modifiées par des diols, éthérifiées au moins partiellement, sont formées essentiellement de :
a) 50 à 70 % en poids de résines de mélamine éthérifiées au moins partiellement, et
b) 50 à 30 % en poids de diols.

3. Préimprégnés de résines de mélamine ou stratifiés de résines de mélamine selon la revendication 1 ou 2, caractérisés en ce que les alcanols possèdent de 1 à 4 atomes de carbone.

4. Préimprégnés de résines de mélamine ou stratifiés de résines de mélamine selon l'une des revendications 1 à 3, caractérisés en ce que les diols sont formés de 40 à 60 % en poids de polyesterdiols et/ou de polyétherdiols et 60 à 40 % en poids de diols de faible poids moléculaire.

5. Préimprégnés de résines de mélamine ou stratifiés de résines de mélamine selon l'une des revendications 1 à 4, caractérisés en ce que les polyesterdiols sont des produits de condensation de l'acide adipique et/ou de l'acide phtalique avec l'éthylèneglycol et/ou le 1,4-butanediol.

6. Préimprégnés de résines de mélamine ou stratifiés de résines de mélamine selon l'une des revendications 1 à 5, caractérisés en ce que les polyétherdiols sont des polytétrahydrofurannediols.

7. Préimprégnés de résines de mélamine ou stratifiés de résines de mélamine selon l'une des revendications 1 à 6, caractérisés en ce que le renfort de fibres est formé d'un non-tissé, d'un tissé ou d'une couche de fibres de verre, de fibres de carbone ou de fibres d'aramide.

8. Procédé de préparation de préimprégnés de résines de mélamine ou de stratifiés de résines de mélamine, caractérisé en ce qu'on imprègne un renfort fibreux en forme de bande avec des résines de mélamine modifiées avec des diols et éthérifiées au moins partiellement, qui sont formées essentiellement de :
a) 40 à 85 % en poids de résines de mélamine éthérifiées au moins partiellement, que l'on peut obtenir par mise en réaction de mélamine, de formaldéhyde et d'alcanols ayant de 1 à 8 atomes de carbone, à un rapport molaire de mélamine:formaldéhyde:alcanol de 1:(5 à 6):(4 à 6), et
b) 60 à 15 % en poids de diols composés de 25 à 75 % en poids de polyesterdiols et/ou de polyétherdiols ayant un poids moléculaire d'au moins 400 g/mole et 75 à 25 % en poids de diols de faible poids moléculaire ayant de 2 à 12 atomes de carbone,
et qu'on fait éventuellement durcir le préimprégné obtenu lors de l'imprégnation, partiellement ou complètement.

9. Résines de mélamine modifiées, éthérifiées au moins partiellement, formées essentiellement de :
a) 40 à 85 % en poids de résines de mélamine éthérifiées au moins partiellement, que l'on peut obtenir par mise en réaction de mélamine, de formaldéhyde et d'alcanols ayant de 1 à 8 atomes de carbone, à un rapport molaire de mélamine:formaldéhyde:alcanol de 1:(5 à 6):(4 à 6), et
b) 60 à 15 % en poids de diols composés de 25 à 75 % en poids de polyesterdiols et/ou de polyétherdiols ayant un poids moléculaire d'au moins 400 g/mole et 75 à 25 % en poids de diols de faible poids moléculaire ayant de 2 à 12 atomes de carbone.
